# EUROPEAN PATENT APPLICATION

(11) **EP 2 878 641 A1**
(43) Date of publication of application: **03.06.2015**
(21) Application number: 14193293.9
(22) Date of filing: 14.11.2014
(51) Int. Cl.: C09D 5/00

(54) **Hydrophobic coating composition for surfaces and a method for preparing and applying this coating composition to surfaces**

(30) Priority: 25.11.2013 TR 201313681
(71) Applicant: ECZACIBASI YAPI GERECLERI SANAYI VE TICARET ANONIM SIRKETI, 34394 Istanbul (TR)
(72) Inventor: Tunali, Ayse, 11300 Bozuyuk-Bilecik (TR); Tamsü Selli, Neslihan, 11300 Bozuyuk-Bilecik (TR); Güleryüz, Emre, 11300 Bozuyuk-Bilecik (TR); Yesil, Zerin, 07058 Antalya (TR); Kesmez, Ömer, 07058 Antalya (TR); Burunkaya, Esin, 07058 Antalya (TR); Akarsu, Murat, 07058 Antalya (TR); Arpac, Ertugrul, 07058 Antalya (TR)
(74) Representative: Petraz, Gilberto Luigi

(57) **Abstract**

The invention relates to a coating composition having hydrophobic property which provides surfaces with water-repellent, anti-lime, and easy cleaning properties; and to a method for preparing the coating composition and applying this coating composition to surfaces as well as products/surfaces comprising the composition prepared according to the invention.

The coating composition developed within the scope of the invention basically comprises a compound used for forming network structure; a compound which is both added in the network structure and provides hydrophobic property; and epoxy, acrylic and/or polyester resins as binder. It is also possible within the scope of the invention that the resin has a hybrid structure modified by the combination of inorganic and organic resins. Supplemental additives are solvent and additives that provide suitable viscosity.

## Description

### Subject of the Invention

The invention relates to a coating composition having hydrophobic property which provides surfaces with water-repellent, anti-lime, and easy cleaning properties; and to a method for preparing the coating composition and applying this coating composition to surfaces as well as products/surfaces comprising the composition prepared according to the invention.

### State of the Art

It is particularly frequent that fixture/faucet surfaces, which are in permanent contact with water, easily get dirty mostly because of water lime, and that corrosive cleaning methods are commonly applied for cleaning lime. Dirt, e.g. lime spots, is inevitable since fixture/faucet surfaces are in permanent contact with user and water due to their place of use. Until now, many studies have been carried out in order for glass and ceramic surfaces to be stain-proof and easy to clean. However, mechanical, physical, and thermal resistance in these studies has been insufficient. In addition, literature search revealed no results regarding the subject matter, i.e. for fixture/faucet surfaces. Today, there exist coating compositions which comprise fluorinated or non-fluorinated organic compounds and which make the surface to which they are applied temporarily (impermanent) hydrophobic by being sprayed on various surfaces, especially glass and ceramic materials. However, there are some problems regarding these compositions as follows; they stay temporarily on the surface; their mechanical, physical, and thermal resistance is not sufficient, they are hazardous to the environment since they typically comprise fluorinated compounds; and they cannot be applied on any surface by spraying method. Some of the solutions offered in the present state of the art are stated below.

The document No. US 2009/0181175A1 discloses an optically transparent composition comprising an epoxy-melamine resin, said composition being applicable to metallic surfaces. The coating composition according to this document comprises a mixture of at least one hydrolysable silane and one hydrolysable metal compound, at least one melamine derivative, and at least one partially and/or fully fluorinated organic compound.

In the patent document No. US 2010/0316868 A1, on the other hand, by using plasma method metallic surfaces are coated with fluorinated compounds, thereby achieving easy-to-clean property.

The hydrophobic coating developed within the scope of the present invention aims to solve these problems mentioned in the present state of the art. The coating composition according to the invention is different from the coatings within the present state of the art in that it stays permanently on the surfaces where it is applied, it does not comprise fluorine, it is applicable to optical surfaces by spraying method, thereby allowing the coating process to be completed using less solution, and that it is mechanically, physically, and thermally resistant. In general, optical properties of surfaces include reflecting and absorbing the light, color and refractive index, which are all important for surfaces. In optical surfaces such as glass and mirror, in order for them to preserve their properties, dip coating is used as the coating method, or pouring may be used for suitable surfaces. One of the greatest advantages provided by coating solution according to the present invention is that it can be applied to optical surfaces by way of spraying method.

### Object of the Invention:

The primary object of the invention is to develop an environmentally friendly coating composition having hydrophobic property where chemicals comprising fluorine and/or fluorinated materials are not used.

Another object of the invention is to develop a coating composition which can be successfully applied to optical surfaces by spraying method without any deformation, discoloration or decoloration, etc., as well as being applied to the surfaces by way of dip coating and pouring techniques, thereby being applicable to surfaces of different geometries. Another one of the most important advantages of providing a coating composition applicable by spraying method is that the coating process is performed with a far less amount of solution than that of the coating solution used in dip coating method.

Another object of the invention is to develop a hydrophobic and easy-to-clean coating composition and a more resistant composition in terms of mechanical, physical, and thermal resistance when compared compositions developed within the present state of the art.

And another object of the invention is to develop a hydrophobic coating composition that permanently remains on surfaces.

### Description of the Invention:

The invention relates to a coating composition having hydrophobic property which provides surfaces with water-repellent, anti-lime, and easy cleaning properties; and to a method for preparing the coating composition and applying this coating composition to surfaces as well as products/surfaces comprising the composition prepared according to the invention.

The composition developed within the scope of the invention can be readily applied to metallic surfaces, e.g. on fixture/faucet surfaces for eliminating the difficulties in cleaning the lime formed on the surfaces because of water.

One of the most significant characteristics that make hydrophobic coating composition developed within the scope of the invention different from the coating compositions in the present state of the art is that the present hydrophobic coating composition is mechanically, physically, and thermally more resistant. Another characteristic of the invention is that it is environmentally friendly since the chemicals comprising fluorine and/or fluorinated material are not used in the content thereof. Another advantage of the coating composition according to the invention is that the coating is flexible. Thus, it can be easily applied on surfaces with distinctive surface geometries, for example fixture/faucet surfaces. Another significant advantage is that the coating composition according to the invention can be applied to surfaces by means of spraying method, which is not very frequent in such surfaces, without damaging the optical properties of surfaces, in addition to using pouring or dip coating as coating technique. The most important advantage of using spraying method is that it can be applied to the surfaces of different geometries. In addition to this, a far less (depending on the surface to be coated) amount of coating solution is required here during application, when compared to dip coating method. Furthermore, surfaces can be coated permanently with the coating composition developed within the scope of the invention and the amount of dirt on surfaces is minimized. Hence, the surfaces become easy to clean. The coating composition according to the present invention makes the surfaces mechanically resistant, besides providing the surfaces with anti-lime, easy-to-clean, and water-repellent properties, and preserving these characteristics for a long period of time.

The coating composition developed within the scope of the invention basically comprises a compound used for forming network structure; a compound which is both added in the network structure and provides hydrophobic property; and epoxy, acrylic and/or polyester resin and the combinations thereof as binder. It is also possible within the scope of the invention that the used resin has a hybrid structure modified by the combination of inorganic and/or organic resins. Supplemental additives are solvent and other additives which provide suitable viscosity.

Polyol (commercially available with the trade name desmophen 651 MPA/X, synthoester 1018) resin with polyester content is preferably used in the composition, wherein it is added into the composition such that it will be present in the composition in the amount of 5-25% or 10-20% by weight of the total solid.

Within the scope of the invention, hydrophobic property is studied in detail according to the source and concentration of the compound having hydrophobic property, the amount of water required for hydrolysis in the environment, the duration of hydrolysis-condensation, the solvent used; wherein functional silanes are used for providing the coating composition with hydrophobic property. The silanes used for both hydrophobic property and to form network structure within the scope of the invention have the general formula of

[R(CH₂)ₙ]ₘSi(OR^{I})₄₋ₘ

wherein the value range of m = 1 - 3, and of n = 1 - 24. R group is a functional group which reacts by polymerization, e.g. addition, condensation. R group in the formula may be alkyl, aryl; besides, it may be an epoxy group and/or a functional group comprising double bond of polymerizable methacrylate. Moreover, it may also be acid anhydride, acid halide, amino, hydroxy, mercapto, and isocyano groups. However, the use of alkyls is preferred most of the time. R' group may be alkyl, aryl, alkoxy alkyl, or alkoxy aryl groups. Particularly, the use of silanes comprising methyl, ethyl, and propyl is preferred. These compounds and/or the combinations thereof can be used in the coating composition.

Tetra-alkoxysilanes having the general formula of Si(OR^{II})₄ are used for forming network structure while preparing the coating solution according to the invention. R^{II} group in the formula may be alkyl or aryl groups, wherein the use of alkyls, for example methyl, ethyl, propyl, is particularly preferred.

The compound having hydrophobic property within the coating solution enables the surfaces to be easily made free of lime, while the binder used in the combination helps this compound to be present in coating form, and to adhere to (hold onto) the surface. Another characteristic of the binder herein is that it is flexible.

In the coating composition developed within the scope of the invention, epoxy silanes, alkyl alkoxy silanes and/or alkyl silanes or their combinations are preferably used as the compound having the general formula of [R(CH₂)*ₙ*]*ₘ*Si(OR^{I})_{4-*m*}. And the compounds of and/or combinations of tetraethyl orthosilicate (tetraethoxysilane), tetramethyl orthosilicate (tetramethoxysilane) are preferably used as the compound having the general formula of Si(OR^{II})₄. The compounds having the general formula of [R (CH₂)ₙ]ₘSi(OR^{I})₄₋ₘ can be selected from methyltrimethoxysilane, ethyltrimethoxysilane, propyltrimethoxysilane, octadecyltrimethoxysilane, glycidoxypropyltrimethoxysilane, glycidoxypropyltriethoxysilane, 3-glycidyloxypropyltrimethoxysilane (GLYMO) and hexadecyltrimethoxysilane, and they can be used individually or in combination.

The coating composition having hydrophobic property developed within the scope of the invention comprises an aqueous solution comprising AIO(OH) 5-15% by weight of the total solid, in addition to silane group compounds mentioned above and to the used resin. The composition having been developed comprises the mixture comprising aluminum sec-butoxide and butyl glycol with an amount of 1 to 2% by weight of the total solid. In the composition, the following can be used for diluting the solution; ethanol, butyl glycol, ethylene glycol, methoxypropanol, propanol, isopropanol, butanol, isobutanol, tertiary butanol, penthanol; dimethyl ketone, diethyl ketone, methyl ethyl ketone, ethyl propyl ketone; dimethyl ether, diethyl ether, ethyl methyl ether; phenol, toluene, xylene solvents or combinations thereof; however butyl glycol, ethylene glycol, methoxypropanol, isopropyl alcohol solvents or the combinations thereof are generally and preferably used. In the composition prepared within the scope of the invention, a mixture of butyl glycol and ethylene glycol prepared at a ratio of 4:1 by weight is used preferably, wherein the solution is diluted until the solid ratio becomes 15 to 30% by weight. The next dilution is performed with butyl glycol.

To prepare the composition within the present invention, first epoxy silane and alkoxysilane is mixed and alkyl alkoxysilane is added into the resulting mixture. Then the aqueous solution comprising AlO(OH) is added into the mixture. Into the mixture of epoxy silane, alkoxysilane, alkyl alkoxysilane, and aqueous solution comprising AlO(OH), polyester polyol resin is added and they are mixed until being properly dispersed. The mixture of aluminum sec-butoxide and butyl glycol is added into the resulting mixture and then aqueous solution comprising AlO(OH) is added into the mixture again. The mixture of butyl glycol and ethylene glycol prepared at a ratio of 4:1 by weight is added into the mixture and the mixture is diluted until the solid ratio of the solution becomes 15-30% by weight. Then butyl glycol is added into the mixture and mixture is diluted until the solid ratio of the solution becomes 10-20%. The details of the method have been explained below.

In order to prepare the coating composition having hydrophobic property developed within the scope of the invention, epoxy silane, alkoxysilane, and alkyl alkoxysilane are mixed first. In this mixture, epoxy silane and alkoxysilane are mixed at a mole ratio of 10:6 and alkyl alkoxysilane is added in an amount of 5 to 10% by weight of the total solid product. The aqueous solution comprising AIO(OH) is added into the mixture of epoxy silane, alkoxysilane, and alkyl alkoxysilane. Into mixture comprising epoxy silane, alkoxysilane, alkyl alkoxysilane, and an aqueous solution comprising AlO(OH), polyol with polyester content is added in an amount of 5-25% or 10-20% by weight of the total solid, and these are mixed until being properly dispersed. Afterwards, the mixture comprising aluminum sec-butoxide and butyl glycol is added into said mixture in an amount of 1 to 2% by weight of the total solid. The aqueous solution comprising AlO(OH) is again added into the mixture. The aqueous solution comprising AlO(OH) is added in an amount of 5-15% by weight of the total solid. The solution is diluted with the mixture of butyl glycol and ethylene glycol prepared at a ratio of 4:1 until the solid ratio becomes 15 to 30% by weight. Later, butyl glycol is added into the mixture and dilution is performed until the solid ratio of the solution becomes 10-20% by weight.

Viscosity modifier is not added into the coating composition developed within the scope of the invention; however, if it is preferred to add, for example hydroxyethyl cellulose can be used.

Before the coating composition developed within the scope of the invention is applied to the surfaces, the surfaces undergo preliminary preparation processes, i.e. cleaning, abrasion, and primer application. In order to clean the surfaces to which coating composition having hydrophobic property will be applied, Almeco (Henkel P3 almeco 18) solution 5% by weight prepared with distilled water, the surfaces to be coated are kept in almeco solution heated up to suitable temperature in ultrasonic bath in sonicator for 15 minutes or for a suitable period of time according to the dirt level of the surfaces. The samples obtained from the solution are washed with tap water and then kept in nitric acid solution for a suitable period of time. The samples obtained from the acid subjected to three separate distilled water baths and then dried in drying oven. After cleaning process was completed, a mixture of water glass and zinc powder for abrasion process is prepared and heated while being mixed. Cleaned surfaces are kept in the mixture of water glass and zinc powder at a certain temperature range for a suitable period of time. The samples/parts obtained from the mixture of water glass and Zn powder are washed immediately with tap water until no dirt remains on the surface and after being washed with tap water immersed into distilled water pot for at least three times. Then the samples treated with distilled water are dried until making sure that they are fully dried. After the abrasion process has been completed primer coating is applied to the surfaces. And heat is applied on the surfaces to be treated with coating composition. Subsequent to primer application, the coating composition having hydrophobic property developed within the scope of the invention is applied to the surfaces of the samples and then the coating applied on the surface is hardened. The details of the process have been explained below.

First, the surfaces to be coated are cleaned in order to make the surface free of dirt, oil, fingerprint, etc. In order to clean the surfaces, Almeco (Henkel P3 almeco 18) solution 5% by weight is prepared with distilled water. The surfaces to be coated are kept in almeco solution heated up to 80°C in ultrasonic bath in sonicator for 15 minutes or for appropriate duration depending on the extent of the dirtiness of surfaces. The samples obtained from the solution are washed with tap water and kept in 10% nitric acid solution for 5 minutes. The samples obtained from the acid are subject to three separate distilled water baths and then dried. Drying process is performed in drying oven.

After the surfaces are cleaned, abrasion is performed. Performing abrasion is important in that it enables the coating to firmly hold onto the surface and that it prevents the surface from being easy to be scratched. For this process, a mixture of water glass (NaSiO₃) and zinc powder is prepared. For this mixture, 1g Zn powder is added into 36 g water glass, the solid ratio of used water glass is 6% or 12.5% or 20% by weight. The use of 36 g water glass, the solid ratio of which is 12.5%, is preferred for the cleaning process. The mixture is heated while being mixed. The surfaces having been cleaned are kept in the mixture of water glass and Zn powder for abrasion process. A temperature between 50 and 80°C, and particularly between 55 and 70°C, is suitable for abrasion process; however, the process is preferably performed at 60-65°C. The surfaces to be coated can be kept in the mixture of water glass and zinc for 0.5 to 7 minutes, particularly for 1 to 5 minutes, more preferably for 1.5 to 3 minutes. In the scope of the invention, the surfaces are kept in the mixture of water glass and Zn powder at 60°C for 2 minutes.

The samples/parts obtained from the mixture of water glass and Zn powder are immediately washed with tap water until no dirt remains on the surface. The samples taken from tap water are immersed in distilled water pot for at least three times, and finally the samples treated with distilled water are fully dried.

Primer application can be performed on to the surfaces the abrasion process of which has been completed. The number of functional groups on the surface to which the coating composition having hydrophobic property developed within the scope of the invention will be applied becomes insufficient for holding of the applied coating. Performing primer coating increases the number of polar compound groups that will contribute to the formation of chemical bonding on the surface in order for the main coating solution to hold onto the surface. Therefore, various primers are applied to the surface in order to increase holding of the coatings applied thereon. For primer application, compounds such as N-(2-aminoethyl)-3-aminopropyltrimethoxysilane (DAMO), N-Methylaminopropyltrimethoxysilane (MAMMO), 3-aminopropyl trimethoxysilane (AMMO) may be used. After this stage, short term heat is applied. After the preliminary preparation processes, i.e. cleaning, abrasion, and primer application on the surface, the coating composition developed within the scope of the invention is applied to the surface.

After all these processes are completed, the main coating solution is applied to the surface. The coating solution, the preparation process of which has been described in detail above, is applied to the surface. The composition developed within the scope of the invention can be applied to surfaces by dip coating and pouring methods; however, the use of spraying method is preferred. After the application of the coating solution on the surfaces is completed, the process of hardening the coating is performed by heat application in drying oven. This hardening process can be performed thermally; likewise, it can be performed by different methods, for example by irradiation.

Thanks to the coating composition developed within the scope of the invention, the surfaces to which the composition is applied are provided with anti-lime, easy-to-clean,
and water-repellent properties and the characteristics of the composition are preserved for a long period of time; besides, the surfaces are made more resistant mechanically. Products/surfaces comprising the composition prepared according to the invention is also within the scope of the invention.

## Claims

1. A coating composition having hydrophobic property which is applicable to surfaces, **characterized in** comprising;
• at least one silane which provides the composition with hydrophobic property and/or is used also for forming network structure, said silane having the general formula of [R (CH₂)ₙ]ₘSi(OR^{I})₄₋ₘ
• at least one silane used for forming network structure and having the general formula of Si(OR^{II})₄
• as binding system epoxy, acrylic and/or polyester resins, polyol resins and/or combinations thereof, or a resin of hybrid nature modified by combining inorganic and organic resins.

2. The composition according to Claim 1, **characterized in that** it further comprises at least one type of solvent, aqueous solution comprising AIO(OH) and a mixture of aluminum sec-butoxide and butyl glycol.

3. The composition according to Claim 2, **characterized in that** the used solvent is at least one of, or a combination of ethanol, butyl glycol, ethylene glycol, propanol, isopropanol, butanol, isobutanol, tertiary butanol, penthanol; dimethyl ketone, diethyl ketone, methyl ethyl ketone, ethyl propyl ketone; dimethyl ether, diethyl ether, ethyl methyl ether; phenol, toluene and xylene.

4. The composition according to Claim 3, **characterized in that** the solvent comprised therein is at least one of, or a mixture of butyl glycol and ethylene glycol prepared at ratio of 4:1 by weight.

5. The composition according to Claim 2, **characterized in that** it comprises the said aqueous solution comprising AlO(OH) in an amount of 5-15% by weight of the total solid; and said mixture of aluminum sec-butoxide and butyl glycol in an amount of 1 to 2% by weight of the total solid.

6. The composition according to Claim 1, **characterized in that** the "m" value is between 1 and 3 and "n" value is between 1 and 24 within the compound having the general formula of [R(CH₂)ₙ]ₘSi(OR^{I})₄₋ₘ.

7. The composition according to Claim 6, **characterized in that** the R' group is at least one of alkyl, aryl, alkoxy alkyl or alkoxy aryl groups within the compound having the general formula of [R (CH₂)ₙ]ₘSi(OR^{I})₄₋ₘ.

8. The composition according to Claim 6, **characterized in that** said R group within the compound having the general formula of [R(CH₂)ₙ]ₘSi(OR^{I})₄₋ₘ is at least one of alkyl, aryl, epoxy groups and/or a functional group comprising double bond of polymerizable methacrylate; acid anhydride; acid halide; amino, hydroxy, *mercapto, and isocyano groups.*

9. The composition according to Claim 7, **characterized in that** said (R') group within the general formula of [R(CH₂)ₙ]ₘSi(OR^{I})₄₋ₘ may be an alkyl group, particularly selected from methyl, ethyl or propyl.

10. The composition according to Claim 9, **characterized in that** the compound having the general formula of [R(CH₂)ₙ]ₘSi(OR^{I})₄₋ₘ is at least one of the compounds of methyltrimethoxysilane, ethyltrimethoxysilane, propyltrimethoxysilane, octadecyltrimethoxysilane, glycidoxypropyltrimethoxysilane, glycidoxypropyltriethoxysilane, 3-glycidyloxypropyltrimethoxysilane (GLYMO) and hexadecyltrimethoxysilane.

11. The composition according to Claim 10, **characterized in that** the compound which has the general formula of [R(CH₂)ₙ]ₘSi(OR^{I})₄₋ₘ and is used for forming network structure is 3-glycidyloxypropyltrimethoxysilane.

12. The composition according to Claim 10, **characterized in that** the compound which has the general formula of [R(CH₂)ₙ]ₘSi(OR^{I})₄₋ₘ and provides the composition with hydrophobic property is hexadecyltrimethoxysilane.

13. The composition according to Claim 1, **characterized in that** the (R^{II}) group mentioned in the general formula of Si(OR^{II})₄ is one of alkyl or aryl group, preferably one of methyl, ethyl, propyl groups.

14. The composition according to Claim 13, **characterized in that** the compound having the general formula of Si(OR^{II})₄ is tetraethyl orthosilicate (tetraethoxysilane).

15. The composition according to Claim 1, **characterized in that** the used resin is polyol resin with polyester content and is in the amount of 5-25 % or 10-20 % by weight of the total solid.

16. A method for preparing the composition according to the preceding claims, **characterized in** comprising the process steps of;
• mixing the epoxy silane and alkoxysilane at a mole ratio of 10:6,
• adding alkyl alkoxysilane into the resulting mixture in an amount of 5 to 10% by weight of the total solid product,
• adding the aqueous solution comprising AlO(OH) into the mixture,
• adding polyester polyol resin into the mixture of epoxy silane, alkoxysilane, alkyl alkoxysilane and aqueous solution comprising AlO(OH) in an amount of 5-25% or 10-20% by weight of the total solid and mixing them until being properly dispersed,
• adding the mixture of aluminum sec-butoxide and butyl glycol into the resulting mixture in an amount of 1 to 2% by weight of the total solid,
• adding the aqueous solution comprising AlO(OH) into the mixture again such that the amount of solution comprising AlO(OH) will be 5-15 % by weight of the total solid ,
• adding the mixture of butyl glycol and ethylene glycol prepared at a ratio of 4:1 by weight into the mixture, and performing dilution until the solid ratio of the solution becomes 15-30% by weight,
• then adding butyl glycol into the mixture, and performing dilution until the solid ratio of the solution becomes 10-20%.

17. A method for applying the composition mentioned in the preceding claims to surfaces, **characterized in** comprising the process steps of;
• before applying the composition to the surfaces cleaning, abrasion and primer coating processes are applied to the surfaces firstly
• in order to clean the surfaces to which coating composition having hydrophobic property will be applied, preparing Almeco (Henkel P3 almeco 18) solution 5% by weight with distilled water,
• keeping the surfaces to be coated in almeco solution heated up to suitable temperature preferably heated up to 80°C in ultrasonic bath in sonicator for 15 minutes or for a suitable period of time according to the dirt level of the surfaces,
• washing the samples obtained from the solution with tap water and keeping them in 10% nitric acid solution for a suitable period of time or preferably for 5 minutes,
• subjecting the samples obtained from the acid to three separate distilled water baths, and then drying them in drying oven,
• preparing a mixture of water glass and zinc powder for abrasion process subsequent to the cleaning of the surfaces,
• heating the mixture while being mixed,
• keeping the cleaned surfaces in the mixture of water glass and zinc powder which comprises 36 g water glass the solid ratio of which is one of 6% or 12.5% or 20% by weight but preferably 12.5% by weight and 1g Zn at a certain temperature range which can be one of 50-80°C or 55-70°C or 60-65°C and preferably 60-65°C for a suitable period of time which can be one of 0.5-7 minutes, or 1-5 minutes, or for 1.5-3 minutes but preferably 2 minutes,
• washing the samples/parts obtained from the mixture of water glass and Zn powder immediately with tap water until no dirt remains on the surface,
• immersing the samples into distilled water pot for at least three times after being washed with tap water,
• drying the samples treated with distilled water until making sure that they are fully dried,
• performing primer coating on the surfaces of the samples, the cleaning and abrasion processes of which have been completed, for primer coating applying at least one of the compounds of N-(2-aminoethyl)-3-aminopropyltrimethoxysilane (DAMO), N-Methylaminopropyltrimethoxysilane (MAMMO), 3-aminopropyl trimethoxysilane (AMMO) to the surface,
• applying heat on the surfaces to be treated with coating composition,
• subsequent to primer application, applying the coating composition having hydrophobic property developed within the scope of the invention to the surfaces of the samples by way of spraying method, and then hardening the coating having been applied on the surface by heat application inside a drying oven or by irradiation.

18. Product/surface comprising the composition prepared according to the preceding claims.
